# EUROPÄISCHE PATENTANMELDUNG

(11) **EP 0 872 332 A2**
(43) Veröffentlichungstag der Anmeldung: **21.10.1998**
(21) Anmeldenummer: 98102625.5
(22) Anmeldetag: 16.02.1998
(51) Int. Cl.: B29D 31/508

(54) **Verfahren zur Schuhherstellung**

(30) Priorität: 15.04.1997 DE 19715551
(71) Anmelder: KLÖCKNER DESMA SCHUHMASCHINEN GmbH, 28832 Achim (DE)
(72) Erfinder: Freese, Klaus, 27299 Langwedel-Etelsen (DE); Becker, Heinz Georg, 27299 Langwedel (DE)
(74) Vertreter: Röther, Peter, Dipl.-Phys.

(57) **Zusammenfassung**

Bei einem Verfahren zur Schuhherstellung, bei dem eine zweilagige Sohle an einen auf einen Leisten gezogenen Schuhschaft angespritzt wird, und zunächst die Laufsohle und danach die Zwischensohle gespritzt wird, ist erfindungsgemäß vorgesehen, daß vor dem Spritzen der Laufsohle an die Formbegrenzungsfläche eines Verdrängers ein Kunststoffaserfilzzuschnitt angelegt und elektrostatisch aufgeladen wird, wodurch der Filzzuschnitt an den metallischen Verdränger angedrückt wird und daran haftet, der Verdränger die aus Formseitenteilen und Bodenstempel bestehende Spritzgießform mit dem anhaftenden Filzzuschnitt verschließt, der so entstandene Formhohlraum mit elastomerem Material gefüllt wird, durch Hochfahren des Bodenstempels eine Verpressung des elastomeren Materials erfolgt und elastomeres Material in den Filzzuschnitt eindringt, der Verdränger aus dem Formwerkzeug herausgefahren und durch den mit dem Schaft bezogenen Leisten ersetzt wird, derart, daß zwischen Leisten und Laufsohle ein Formhohlraum für die Zwischensohle verbleibt, wonach dieser Formhohlraum mit einem Kunststoffmaterial gefüllt wird, wobei sich dieses die Zwischensohle bildende Material mit dem Filzzuschnitt und dem Schaft verbindet und schließlich die Form geöffnet und der fertige Schuh vom Leisten entfernt wird.

## Beschreibung

Die Erfindung betrifft ein Verfahren zur Schuhherstellung, bei dem eine zweilagige Sohle an einen auf einen Leisten gezogenen Schuhschaft angespritzt wird, und zunächst die Laufsohle und danach die Zwischensohle gespritzt wird.

Derartige Verfahren werden in der Regel auf sogenannten Rundtischanlagen geführt, wobei am drehbaren Rundtisch radial eine Vielzahl von Formstationen angeordnet sind. Die Formstationen bestehen aus einem nach oben und unten verfahrbaren Bodenstempel, mindestens zwei Seitenformteilen, die zusammen mit dem Bodenstempel einen Formhohlraum bilden, der durch Aufsetzen eines Verdrängers bzw. eines Leistens nach oben hin verschlossen wird.

Zur Formung der Laufsohle wird der Formhohlraum zunächst mit dem Verdränger verschlossen. Nachdem die Formstation in den Bereich der Anspritzstation gefahren ist, legt sich die Düse der Einspritzeinheit an den Angußkanal und spritzt das Material für die Laufsohle ein. Danach wird der Verdränger aus dem Formwerkzeug herausgefahren. An seine Stelle tritt der mit dem Schuhschaft bezogene Leisten. Dabei verbleibt ein Zwischenraum zwischen der im ersten Schritt gespritzten Laufsohle und der Unterseite des Leistens. In diesen Zwischenraum wird mittels eines weiteren Einspritzaggregats nun das Material für die Zwischensohle eingespritzt. Zwischensohle und Laufsohle verbinden sich miteinander und auch die Zwischensohle und der auf den Leisten gezogene Schuhschaft.

Die Laufsohle wird vorteilhafterweise aus einem abriebfestem Material gefertigt, während die Zwischensohle im Hinblick auf einen Dämpfungseffekt zur Erhöhung des Gehkomforts aus einem nachgiebigerem Material besteht.

Infolge der Unterschiedlichkeit der beiden Materialien kommt es vor, daß sich die beiden Materialien beim Spritzen der Zwischensohle nicht ausreichend fest miteinander verbinden. Daher werden Vorkehrungen getroffen, die Grenzfläche zwischen den beiden Materialien so zu gestalten, daß eine innige Verbindung zwischen den beiden Schichten stattfinden kann.

Gemäß dem erfindungsgemäßen Verfahren wird zu diesem Zweck zwischen Laufsohle und Zwischensohle ein der Sohlenform entsprechender Kunststoffaserfilzzuschnitt eingelegt. Beim Spritzen sowohl der Laufsohle als auch beim anschließenden Spritzen der Zwischensohle dringt sowohl das eine als auch das andere Material in den Filz ein. Durch Hochfahren des Bodenstempels wird sowohl die Laufsohle als auch die Zwischensohle verpresst, so daß die Materialverbindung zwischen Zwischensohle, Filzzuschnitt und Laufsohle noch inniger wird.

Bislang wird nach dem Spritzen der Laufsohle und dem Herausfahren des Verdrängers der Filzzuschnitt auf die geformte Laufsohle aufgelegt, wonach dann durch Aufsetzen des Leistens der für die Zwischensohle vorgesehene Zwischenraum gebildet wird. Dieses Verfahren ist zeitlich aufwendig, was auch dazu führt, daß durch Anhärten des Laufsohlenmaterials eine Verbindung desselben mit dem Filzzuschnitt nicht mehr in befriedigender Weise erfolgt.

Der Erfindung liegt daher die Aufgabe zugrunde, ein Verfahren der eingangs genannten Art so zu führen, daß bereits beim Spritzen der Laufsohle eine Verbindung des Laufsohlenmaterials mit dem Kunststoffaserfilzzuschnitt oder einem ähnlichen Material erfolgen kann.

Die Erfindung löst diese Aufgabe dadurch, daß vor dem Spritzen der Laufsohle an die Formbegrenzungsfläche eines Verdrängers ein Kunststoffaserfilzzuschnitt angelegt und elektrostatisch aufgeladen wird, wodurch der Filzzuschnitt an den metallischen Verdränger angedrückt wird und daran haftet, der Verdränger die aus Formseitenteilen und Bodenstempel bestehende Spritzgießform mit dem anhaftenden Filzzuschnitt verschließt, der so entstandene Formhohlraum mit elastomerem Material gefüllt wird, durch Hochfahren des Bodenstempels eine Verpressung des elastomeren Materials erfolgt und elastomeres Material in den Filzzuschnitt eindringt, der Verdränger aus dem Formwerkzeug herausgefahren und durch den mit dem Schaft bezogenen Leisten ersetzt wird, derart, daß zwischen Leisten und Laufsohle ein Formhohlraum für die Zwischensohle verbleibt, wonach dieser Formhohlraum mit einem Kunststoffmaterial gefüllt wird, wobei sich dieses die Zwischensohle bildende Material mit dem Filzzuschnitt und dem Schaft verbindet und schließlich die Form geöffnet und der fertige Schuh vom Leisten entfernt wird.

Auf diese Weise ist es möglich, den Filzzuschnitt solange sicher am Verdränger zu befestigen, bis dieser den Formhohlraum verschlossen hat und der Formhohlraum mit dem elastomerem Material gefüllt ist. Es hat sich herausgestellt, daß die elektrostatische Haftung zwischen Filzzuschnitt und Verdränger einerseits einen sicheren Halt des Filzzuschnitts am Verdränger bewirkt und auf diese Weise andererseits dafür gesorgt wird, daß der Filzzuschnitt lagerichtig im Formwerkzeug angeordnet ist.

Gemäß einer bevorzugten Ausführungsform des Verfahrens geschieht die elektrostatische Aufladung durch einen auf den Zuschnitt gerichteten ionisierten Luftstrom.

In einer besonders einfachen Ausführungsform sorgt eine handelsübliche, von Hand zu betätigende Lackierpistole, die auf elektrostatischer Basis arbeitet, für den ionisierten Luftstrom. Die die Maschine bedienende Person hält den Filzzuschnitt gegen die Unterfläche des Verdrängers, richtet den ionisierten Luftstrom aus der Lackierpistole auf den Zuschnitt, wobei dieser zum einen infolge des Luftdrucks an den Verdränger angepreßt wird und zum anderen elektrostatisch aufgeladen wird. Lackierpistole und Spritzgießmaschine sind dabei geerdet, so daß die elektrostatische Anziehungskraft voll zur Entfaltung kommt und zum anderen eine Gefährdung der die Maschine bedienenden Person ausgeschlossen ist.

In einer weiteren Ausführungsform des Verfahrens kann vorgesehen sein, daß der Zuschnitt beispielsweise durch Spitzenelektroden direkt elektrostatisch aufgeladen wird.

Eine etwas aufwendigere Verfahrensführung ist durch die Merkmale des Anspruchs 8 gegeben. Hierbei wird der Filzzuschnitt voll- automatisch von einem Handlinggerät (Roboter) vor den Verdränger gefahren. Am Handlinggerät befindet sich die modifizierte Lackierpistole, die so gesteuert ist, daß sie, wenn der Filzzuschnitt seine Lage erreicht hat, in Tätigkeit gesetzt wird. Auf diese Weise ist gewährleistet, daß die die Maschine bedienende Person nicht in den Formstationen-Bereich hineinlangen muß. Darüberhinaus ergeben sich hierdurch erhöhte Taktzahlen. Statt der Lackierpistole kann am Handlingsgerät auch eine Elektrodenanordnung sein, durch die der Filzzuschnitt direkt elektrostatisch aufgeladen wird.

Gemäß Patentanspruch 4 ist vorgesehen, daß der Kunststoffaserfilz eine dünne Zwischenlage bildet, die darüber hinaus von den beiden Kunststoffmaterialien vollständig durchtränkt wird und beim fertigen Schuh optisch kaum ins Gewicht fällt.

Die Dicke des Zuschnitts beträgt beispielsweise 1 bis 1,3 mm. Als Material kann dabei Polyester gewählt werden.

Als Material für die Laufsohle wird Gummi gewählt, welches besonders abriebfest ist, während für die Zwischensohle Polyurethan gewählt wird, das dem fertigen Schuh den angestrebten Laufkomfort gibt.

## Patentansprüche

1. Verfahren zur Schuhherstellung, bei dem eine zweilagige Sohle an einen auf einen Leisten gezogenen Schuhschaft angespritzt wird, und zunächst die Laufsohle und danach die Zwischensohle gespritzt wird,
dadurch gekennzeichnet,
daß vor dem Spritzen der Laufsohle an die Formbegrenzungsfläche eines Verdrängers ein Kunststoffaserfilzzuschnitt angelegt und elektrostatisch aufgeladen wird, wodurch der Filzzuschnitt an den metallischen Verdränger angedrückt wird und daran haftet, der Verdränger die aus Formseitenteilen und Bodenstempel bestehende Spritzgießform mit dem anhaftenden Filzzuschnitt verschließt, der so entstandene Formhohlraum mit elastomerem Material gefüllt wird, durch Hochfahren des Bodenstempels eine Verpressung des elastomeren Materials erfolgt und elastomeres Material in den Filzzuschnitt eindringt, der Verdränger aus dem Formwerkzeug herausgefahren und durch den mit dem Schaft bezogenen Leisten ersetzt wird, derart, daß zwischen Leisten und Laufsohle ein Formhohlraum für die Zwischensohle verbleibt, wonach dieser Formhohlraum mit einem Kunststoffmaterial gefüllt wird, wobei sich dieses die Zwischensohle bildende Material mit dem Filzzuschnitt und dem Schaft verbindet und schließlich die Form geöffnet und der fertige Schuh vom Leisten entfernt wird.

2. Verfahren nach Anspruch 1,
dadurch gekennzeichnet,
daß die elektrostatische Aufladung durch einen auf den Zuschnitt gerichteten ionisierten Luftstrom bewirkt wird.

3. Verfahren nach Anspruch 1,
dadurch gekennzeichnet,
daß die elektrostatische Aufladung direkt durch eine auf den Filzzuschnitt wirkende Elektrodenanordnung bewirkt wird.

4. Verfahren nach einem der Ansprüche 1 bis 3,
dadurch gekennzeichnet,
daß der Kunststoffaserfilz aus Polyester besteht und eine Dicke von 1 bis 1,3 mm aufweist.

5. Verfahren nach einem der Ansprüche 1 bis 4,
dadurch gekennzeichnet,
daß das elastomere Material für die Laufsohle Gummi ist.

6. Verfahren nach einem der Ansprüche 1 bis 5,
dadurch gekennzeichnet,
daß die Zwischensohle aus Polyurethan gefertigt wird.

7. Verfahren nach einem der Ansprüche 1, 2 und 4 bis 6,
dadurch gekennzeichnet,
daß der ionisierte Luftstrom mittels einer auf elektrostatischer Basis arbeitenden Lackierpistole erzeugt und auf den Filzzuschnitt gerichtet wird.

8. Verfahren nach einem der Ansprüche 1 bis 5,
dadurch gekennzeichnet,
daß der Kunststoffaserfilzzuschnitt mittels eines Handling-Automaten oder Roboter an den Verdränger angelegt wird.

9. Verfahren nach Anspruch 8,
dadurch gekennzeichnet,
daß die den ionisierten Luftstrom aussendende Vorrichtung mit dem Handling-Automaten gekoppelt ist.

10. Verfahren nach Anspruch 8,
dadurch gekennzeichnet,
daß die die Ionisierung des Filzzuschnitts bewirkende Elektrodenanordnung mit dem Handling-Automaten gekoppelt ist.
